# EUROPEAN PATENT SPECIFICATION

(11) **EP 0 396 742 B1**
(45) Date of publication and mention of the grant of the patent: **23.03.1994**
(21) Application number: 88900129.3
(22) Date of filing: 21.12.1987
(51) Int. Cl.: E21D 9/08

(54) **SEAL STRUCTURE FOR MAIN BEARING OF TUNNELING MACHINE**
ABDICHTUNGSSTRUKTUR FÜR HAUPTLAGER EINER TUNNELMASCHINE
STRUCTURE DE JOINT POUR LES PALIERS PRINCIPAUX D'UN ENGIN DE PERCEMENT DE TUNNELS

(43) Date of publication of application: 14.11.1990
(73) Proprietor: KABUSHIKI KAISHA KOMATSU SEISAKUSHO, Minato-ku Tokyo 107 (JP)
(72) Inventor: YAMAZAKI, Toshihiro, Hirakata-shi Osaka-fu 573 (JP); KAI, Takashi, Yawata-shi Kyoto-fu 614 (JP); KAJIWARA, Misao, Osaka-fu 573 (JP)
(74) Representative: Grünecker, Kinkeldey, Stockmair & Schwanhäusser Anwaltssozietät
(86) International application number: JP8701008
(87) International publication number: WO8905897

(56) References cited:
- GB-A- 1 058 899
- JP-Y- 624 619
- JP-Y- 5 931 829
- JP-Y- 6 139 026

## Description

The present invention relates to a seal structure for main bearings that rotatably support a cutter head in a tunneling machine.

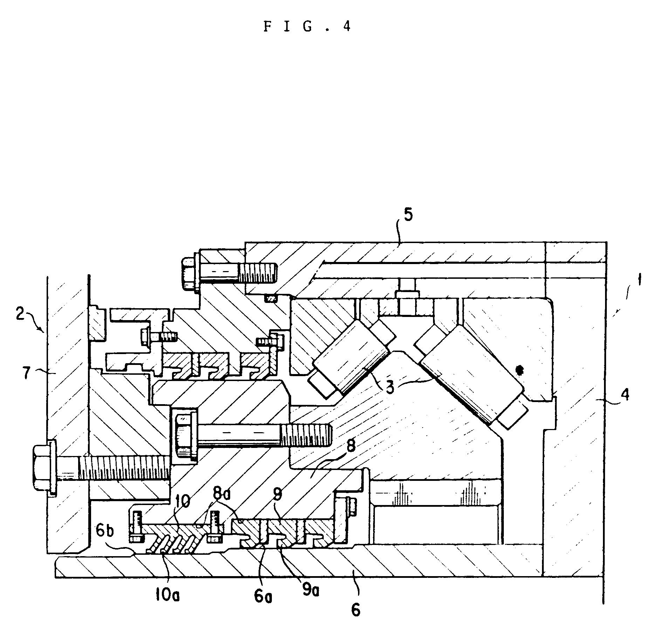

A main bearing seal structure for use in tunneling machines has heretofore been known, in which, as shown in Fig. 4 of the accompanying drawings, a cutter head 2 is rotatably supported through main bearings 3 on a cutter head support 1 which comprises an outer peripheral cylindrical member 5 and a cylindrical projection 6, which are connected to a vertical plate 4 at substantially right angles, and a cylindrical projection 8 of the cutter head 2 is loosely fitted on the outer periphery of the cylindrical projection 6 of the cutter head support 1 through seal members 9 and 10, which are attached in series in the axial direction to inner peripheral surfaces 8a, respectively, of the cylindrical projection 8, with the respective lip portions 9a and 10a of the seal members 9 and 10 being in slide contact with the outer peripheral surfaces 6a and 6b of the cylindrical projection 6, which defines seal contacting surfaces.

When this conventional structure is used for a long time, the outer peripheral surfaces 6a and 6b of the cylindrical projection 6 become worn due to repeated slide contact by the seal members 9 and 10, causing a sealing failure. In consequence, earth and sand as well as water enter the interior of the machine through the worn portion, causing a rotation failure of the main bearings 3. As a result, the machine becomes unable to perform digging.

In JP-Y2-59-31829, a seal device of a shielding machine is disclosed. The seal device comprises a ring having a flanged front and a plurality of staged sealing members and a rubber lining member provided on an inner periphery of an attachment table on the side of a shield body. Each of the sealing members is composed of an annular base and a plurality of lips. After the cylindrical portion is inserted into the interior of the shield body, the seal lip is bent forwardly of the shield body by its contact with the rubber lining member. When the shielding operation is performed by rotating of the cutter disk, the front end of the lip is slidably contacted with the rubber lining member, thus reducing the wearing.

In GB-A-1,058,899, a shaft seal is disclosed. This shaft seal is located on the propeller shaft of ships. A fluid-tight seal between a rotating member and a stationary member is provided whereby the shaft seal should be self-compensating, accommodating and compensating for propeller shaft width vibration, rotation and bearing wear while excluding sea water and retaining an oil bath around the propeller shaft bearings. The shaft seal is provided by an outer peripheral surface of a sleeve which is in engagement with a number of seal elements. The sleeve which is subjected to wear should be easily replaceable.

In JP-Y2-62-4619, a shaft seal device of a shielding-type tunneling machine is disclosed. An agitator shaft is rotated by a driving motor whereby an agitation vane is mounted to the front end of the agitator shaft. A number of seals are mounted to a bearing housing which is secured to a shield body by means of bolts. When the agitator shaft is rotated, it is sealed by those seals, but even if an agitation shaft having an increased surface hardness is utilized, the surface of the agitator is read by a lip portion of the seals. As a counter-measure to the wearing, a slide shim having a thickness corresponding to the slide amount of the agitator shaft is arranged and just before the end of the lifetime of the seal device of the agitator shaft, the agitator driving motor is removed and the bolt is loosened to that extent that the slide shim can be removed.

In view of the above-described circumstances, it is an object of the present invention to provide seal structure for main bearings of a tunneling machine wherein seal contacting surfaces are formed on an easily detachable member so that when the seal contacting surfaces become worn, they can be readily replaced by new seal contacting surfaces.

This object is solved by a seal structure for main bearings of a tunneling machine with the features of the preamble part of claim 1 by the features of the characterizing part of claim 1. Preferred embodiments of the invention are disclosed in the subclaims. According to one of the preferred embodiments, a seal structure is provided wherein a seal contacting surface can be readily shifted from a portion which has become worn to another portion which has not yet become worn.

The above and other objects, modes and advantages of the present invention will become apparent to those skilled in the art from the following description of preferred embodiments which are conformable to the principle of the present invention, taken in conjunction with the accompanying drawings.
Fig. 1 is a fragmentary longitudinal sectional view showing the distal end portion of a tunneling machine;
Fig. 2 is a fragmentary longitudinal sectional view showing an essential part of a first embodiment of the present invention that relates to a seal structure for main bearings of a tunneling machine;
Fig. 3 is a fragmentary longitudinal sectional view showing an essential part of a second embodiment of the present invention that relates to a seal structure for main bearings of a tunneling machine; and
Fig. 4 is a fragmentary longitudinal sectional view showing an essential part of a conventional seal structure for main bearings of a tunneling machine.

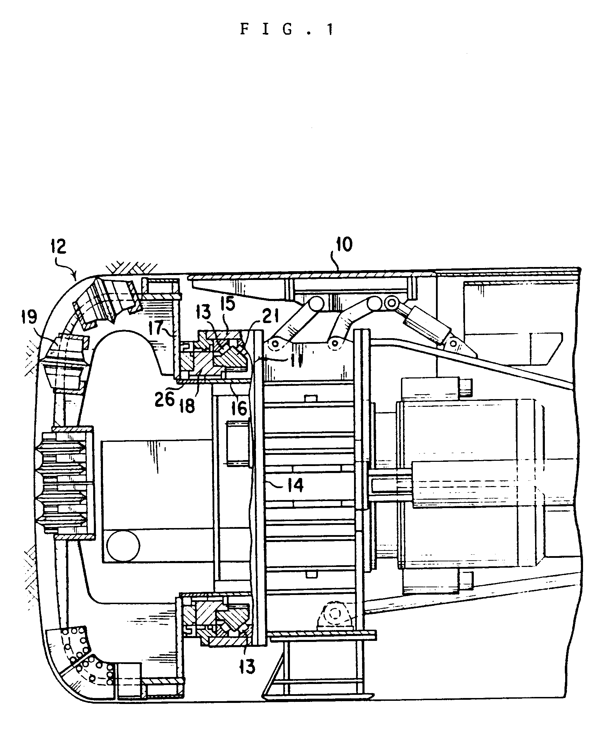

As shown in Fig. 1, which is a fragmentary longitudinal sectional view showing the distal end portion of a tunneling machine, a cutter head unit 12 is rotatably supported through main bearings 13 on a cutter head support 11 which is rigidly secured to a cylindrical body 10.

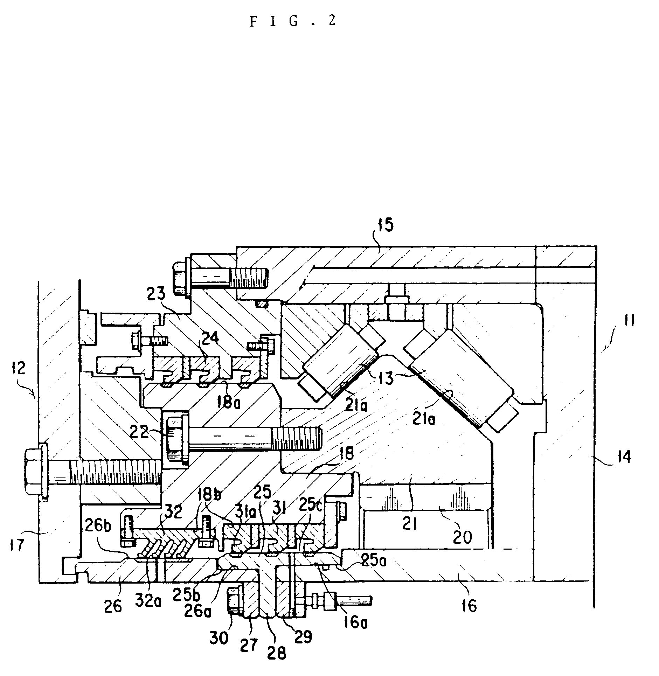

As will be clear from Fig. 2, which shows an essential part of a first embodiment of the present invention, the cutter head support 11 comprises an outer peripheral cylindrical member 15 and a first cylindrical projection 16 which is positioned radially inward of the cylindrical member 15, the cylindrical member 15 and the cylindrical projection 16 being connected at substantially right angles to a vertical plate 14 in such a manner as to extend toward the above-described cutter head unit. The outer peripheral cylindrical member 15 and the first cylindrical projection 16 define therebetween a ring-shaped space 11a which is coaxial with respect to the cylindrical body 10. The cutter head unit 12 comprises a second cylindrical projection 18 which is rigidly secured to the rear side of a face plate 17 so as to face the ring-shaped space 11a, and a plurality of cutters 19 which are provided on the front side of the face plate 17. Further, a ring gear member 21, which is substantially triangular in cross-section and has an internally-toothed ring gear 20, is rigidly secured to the distal end portion of the second cylindrical projection 18 by means of a bolt 22 in such a manner that the ring gear member 21 projects into the ring-shaped space 11a. The main bearings 13 are in contact with two outer peripheral slant surfaces 21a of the ring gear member 21. In addition, a cylindrical cover member 23 is rigidly secured to the distal end face of the outer peripheral cylindrical member 15, and the area between the cover member 23 and the outer peripheral surface 18a of the second cylindrical projection 18 is sealed with a seal 24.

On the other hand, a reduced-diameter step portion 16a is formed in the projecting end portion of the first cylindrical projection 16, and the inner peripheral surface 25a at one end of a first ring 25 is fitted in the reduced-diameter step portion 16a. To the inner peripheral surface 25b at the other end of the first ring 25 is fitted a reduced-diameter step portion 26a at one end of a second ring 26. An inward flange 27 projects radially inward from the mentioned end of the second ring 26. Similary, an inward flange 28 projects radially inward from the substantially central portion of the first ring 25, and an inward flange 29 projects radially inward from the distal end of the first cylindrical projection 16. These three inward flanges 27, 28 and 29 are connected to each other by means of a plurality of bolts 30.

First and second seals 31 and 32 are attached to inner peripheral surfaces 18b, respectively, of the second cylindrical projection 18. The lip portions 31a and 32a of these seals are in slide contact with the respective outer peripheral surfaces 25c and 26b of the first and second rings 25 and 26, which define seal contacting surfaces.

Thus, when the respective outer peripheral surfaces 25c and 26b of the first and second rings 25 and 26, which define seal contacting surfaces, have become worn, the worn seal contacting surfaces are replaced with new ones simply by untightening and removing the bolts 30 and replacing the first and second rings 25 and 26 with new ones.

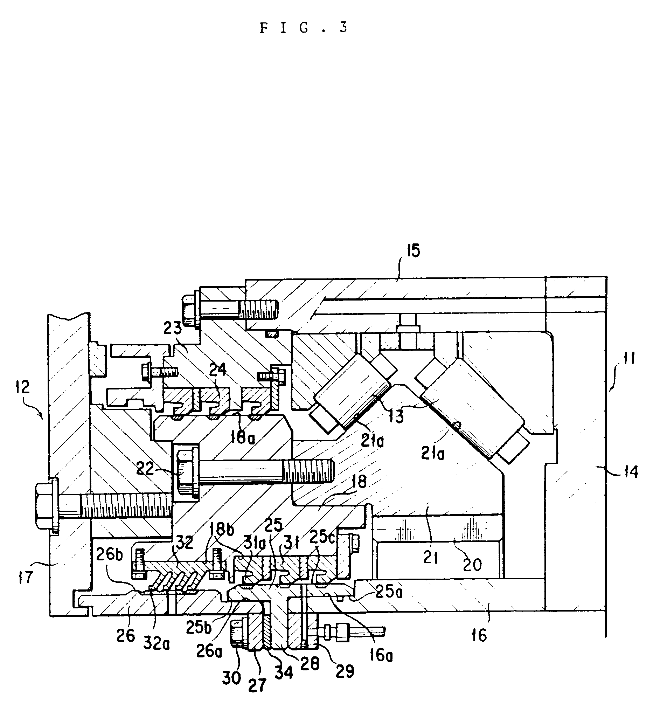

As will be clear from Fig. 3, which shows an essential part of a second embodiment of the present invention, if the mounting position of the second ring 26 relative to the first ring 25 is axially moved closer to the cutter head unit 12 by interposing one spacer ring 34 between the inward flanges 27 and 28, the position of contact between the seal contacting surface of the second ring 26 and the lip portion 32a of the second seal 32 shifts, and it is therefore possible to maintain excellent seal performance for a long period of time without the need to replace the second ring 32. It should be noted that the mounting positions of both the first and second rings 25 and 26 relative to the first cylindrical projection 16 may be axially moved closer to the cutter head unit 12 by interposing one spacer ring between the inward rings 28 and 29.

## Claims

1. A seal structure for main bearings of a tunneling machine which machine includes a cutter head unit (12) provided at a distal end of the tunnelling machine having one cylindrical body (10); one cutter head support (11) disposed just behind said cutter head unit (12), said cutter head support (11) having one outer peripheral cylindrical member (15) and a first cylindrical projection (16) positioned radially inward of said outer peripheral cylindrical member, said cylindrical member (15) and said first cylindrical projection (16) being connected at substantially right angles to at least one vertical plate (14) secured to said cylindrical body (10) in such a manner that said cylindrical member (15) and said first cylindrical projection (16) extend towards said cutter head unit (12), thereby defining a ring-shaped space (11a), which is coaxial with respect to said cylindrical body (10) between said outer peripheral member (15) and said first cylindrical projection (16); a second cylindrical projection (18) attached to the rear side of said cutter head unit (12) so as to face said ring-shaped space (11a) and said cutter head support (11); an internally-toothed ring gear member (21) attached to the distal end of said second cylindrical projection (18) so as to project into said ring-shaped space (11a); and main bearings (13) provided between the outer peripheral cylindrical member (15) of said cutter head support (11) and said internallytoothed ring gear member (21) to rotatably support said cutter head unit (12) with respect to said cutter head support (11); whereby the seal structure comprises a plurality of seals (31,32) which are attached to inner peripheral surfaces (18b) of said second cylindrical projection (18) of said cutter head unit (12) in such a manner that said seals are in slide contact with seal contacting surfaces which are provided opposite to said plurality of seals (31,32),
**characterized in that**
at least one ring member (25,26) is detachably attached to said first cylindrical projection (16) of said cutter support (11), whereby said seal contacting surfaces being formed by the outer peripheral surface of said ring member (25,26).

2. A seal structure for main bearings of a tunneling machine according to claim 1,
**characterized in that**
said ring member (25,26) comprises a first ring (25) detachably mounted along said first cylindrical projection (16) of said cutter head support (11), and a second ring (26) detachably mounted along said first ring (25) so that it is positioned closer to said cutter head unit (12) than said first ring (25).

3. A seal structure for main bearings of a tunneling machine according to Claim 2, wherein said first and second rings (25, 26) have respective inward flanges (28, 27) projecting radially inward therefrom, which are fastened by means of a plurality of bolts (30) to an inward flange (29) that projects radially inward from the distal end of said first cylindrical projection (16), thereby connecting together said first and second rings (25, 26).

4. A seal structure for main bearings of a tunneling machine according to Claim 3, further comprising one spacer ring (34) which is interposed either between the inward flange (28) of said first ring (25) and the inward flange (27) of said second ring (26) or between the inward flange (29) of said first cylindrical projection (16) and the inward flange (28) of said first ring (25) in order to axially shift at least one of the seal contacting surfaces of said first and second rings (25, 26) closer to said cutter head unit (12).

## Patentansprüche

1. Eine Abdichtungsstruktur für ein Hauptlager einer Tunnelmaschine, wobei die Tunnelmaschine einen zylindrischen Körper (10) und an ihrem entfernten Ende eine Bohrkopfeinheit (12) aufweist; ein Bohrkopfträger (11) direkt hinter der Bohrkopfeinheit (12) angeordnet ist, wobei der Bohrkopfträger (11) ein äußeres, peripheres zylindrisches Bauteil (15) und einen ersten zylindrischen Vorsprung (16) aufweist, welcher radial einwärts zum äußeren peripheren zylindrischen Bauteil angeordnet ist, wobei zylindrisches Bauteil (15) und erster zylindrischer Vorsprung (16) im wesentlichen unter einem rechten Winkel zu wenigstens einer Vertikalplatte (14) mit dieser verbunden sind, welche Vertikalplatte am zylindrischen Körper (10) in einer solchen Weise gesichert ist, daß das zylindrische Bauteil (15) und der erste zylindrische Vorsprung (16) in Richtung zur Bohrkopfeinheit (12) abstehen, wobei ein ringförmiger Raum (11a) gebildet ist, der koaxial zum zylindrischen Körper (10) zwischen dem äußeren peripheren Bauteil (15) und dem ersten zylindrischen Vorsprung (16) angeordnet ist; ein zweiter zylindrischer Vorsprung (18) an einer Rückseite der Bohrkopfeinheit (12) gegenüberliegend zum ringförmigen Raum (11a) und dem Bohrkopfträger (11) angeordnet ist; ein innenverzahntes Ringzahnrad (21) am entfernten Ende des zweiten zylindrischen Vorsprungs (18) so angeordnet ist, daß es in den ringförmigen Raum (11a) hineinragt; und Hauptlager (13) zwischen dem äußeren peripheren, zylindrischen Bauteil (1) des Bohrkopfträgers (11) und dem innenverzanten Ringzahnrad (21) angeordnet ist, welches die Bohrkopfeinheit (12) relativ zum Bohrkopfträger (11) drehbar lagert, wobei eine Dichtstruktur eine Vielzahl von Dichtungen (31, 32) aufweist, die an einer inneren peripheren Oberfläche (18b) des zweiten zylindrischen Vorsprungs (18) der Bohrkopfeinheit (12) so angeordnet sind, daß die Dichtungen im Gleitkontakt mit Dichtkontaktflächen stehen, die gegenüberliegend zu der Anzahl von Dichtungen (31, 32) ausgebildet sind,
**dadurch gekennzeichnet,**
daß wenigstens ein Ringbauteil (25, 26) lösbar am ersten zylindrischen Vorsprung (16) des Bohrkopfträgers (11) angeordnet ist, wobei die Dichtkontaktflächen durch eine äußere, periphere Fläche des Ringbauteils (25, 26) gebildet sind.

2. Abdichtungsstruktur für Hauptlager einer Tunnelmaschine nach Anspruch 1,
**dadurch gekennzeichnet,**
daß das Ringbauteil (25, 26) einen ersten Ring (25) aufweist, welcher lösbar entlang des ersten zylindrischen Vorsprungs (16) des Bohrkopfträgers (11) angeordnet ist, und einen zweiten Ring (26) aufweist, welcher lösbar entlang des ersten Rings (25) in einer Position näher zur Bohrkopfeinheit (12) als der erste Ring (25) lösbar befestigt ist.

3. Abdichtungsstruktur für Hauptlager einer Tunnelmaschine nach Anspruch 2,
**dadurch gekennzeichnet,**
daß erster und zweiter Ring (25, 26) entsprechende Innenflansche (28, 27) aufweisen, welche radial nach innen von den Ringen abstehen, wobei die Innenflansche durch eine Anzahl von Bolzen (30) an einem Innenflansch (29) befestigt sind, welcher vom entfernten Ende des ersten zylindrischen Vorsprungs (16) radial nach innen absteht, wodurch erster und zweiter Ring (25, 26) miteinander verbunden sind.

4. Abdichtungsstruktur für Hauptlager einer Tunnelmaschine nach Anspruch 3,
**dadurch gekennzeichnet,**
daß ein Abstandsring (34) entweder zwischen dem Innenflansch (28) des ersten Rings (25) und dem Innenflansch (27) des zweiten Rings (26) oder zwischen dem Innenflanschen (29) des ersten zylindrischen Vorsprungs (16) und dem Innenflansch (28) des ersten Rings (25) angeordnet ist, wodurch wenigstens eine Dichtkontaktfläche des ersten und zweiten Ringes (25, 26) näher zur Bohrkopfeinheit (12) axial verschoben ist.

## Revendications

1. Structure a garnitures d'étanchéité, pour les roulements principaux d'un tunnelier qui comprend une unité de tête de coupe (12), située à une extrémité distale du tunnelier et comportant un corps cylindrique (10), un support de tête de coupe (11), disposé juste derrière l'unité de tête de coupe (12) et comportant une pièce cylindrique périphérique extérieure (15) et une première partie en saillie cylindrique (16) qui est disposée radialement vers l'intérieur vis-à-vis de la pièce cylindrique périphérique extérieure, cette pièce cylindrique (15) et la première partie en salle cylindrique (16) étant fixées pratiquement à angle droit sur au moins une plaque verticale (14) fixée au corps cylindrique (10) de façon telle que la pièce cylindrique (15) et la première partie en salle cylindrique (16) s'étendent vers J'unité de tête de coupe (12) en délimitant ainsi un espace annulaire (11a) qui est ménagé, suivant le même axe que le corps cylindrique (10), entre la pièce périphérique extérieure (15) et la première partie en saillie cylindrique (16), une seconde partie en saillie cylindrique (18), fixée à la face arrière de l'unité de tête de coupe (12) de façon à faire face à l'espace annulaire (11a) et au support de tête de coupe (11), une pièce annulaire dentée (21) à denture intérieure, fixée à l'extrémité distale de la seconde partie en salle cylindrique (18) de façon à faire saillie dans l'espace annulaire (11a), et des roulements principaux (13) disposés entre la pièce cylindrique périphérique extérieure (15) du support de tête de coupe (11) et la pièce annulaire dentée (21) à denture intérieure de façon à porter l'unité de tête de coupe (12) d'une manière rotative vis-à-vis du support de tête de coupe (11), ladite structure à garnitures d'étanchéité comprenant plusieurs garnitures d'étanchéité (31, 32) qui sont fixées à des surfaces périphériques intérieures (18b) de la seconde partie en salle cylindrique (18) de l'unité de tête de coupe (12) de façon telle que ces garnitures d'étanchéité sont en contact glissant avec les surfaces de contact d'étanchéité qui sont situées en regard des garnitures d'étanchéité (31, 32),
caractérisée en ce qu'au moins une pièce en forme d'anneau (25, 26) est fixée d'une manière amovible à la première partie en saillie cylindrique (16) du support de tête de coupe (11), lesdites surfaces de contact d'étanchéité étant formées par la surface périphérique extérieure de la pièce en forme d'anneau (25, 26).

2. Structure à garnitures d'étanchéité, pour roulements principaux d'un tunnelier, conforme à la revendication 1, caractérisée en ce que la pièce en forme d'anneau (25, 26) comprend un premier anneau (25), monté d'une manière amovible le long de la première partie en salle cylindrique (16) du support de tête de coupe (11), et un second anneau (26) monté d'une manière amovible le long du premier anneau (25) de façon à être positionné plus près de l'unité de tête de coupe (12) que le premier anneau (25).

3. Structure à garnitures d'étanchéité, pour roulements principaux d'un tunnelier, conforme à la revendication 2, dans laquelle les premier et second anneaux (25, 26) comportent des brides intérieures respectives (28, 27) qui font salle radialement vers l'intérieur à partir de ces anneaux et qui sont fixées, au moyen de plusieurs boulons (30), sur une bride intérieure (29) qui fait salle radialement vers l'intérieur à partir de l'extrémité distale de la première partie en saillie cylindrique (16), réunissant ainsi entre eux les premier et second anneaux (25, 26).

4. Structure à garnitures d'étanchéité, pour roulements principaux d'un tunnelier, conforme à la revendication 3, comprenant en outre un anneau-entretoise (34) qui est interposé soit entre la bride intérieure (28) du premier anneau (25) et la bride intérieure (27) du second anneau (26), soit entre la bride intérieure (29) de la première partie en saillie cylindrique (16) et la bride intérieure (28) du premier anneau (25), de façon à décaler axialement au moins l'une des surfaces de contact d'étanchéité des premier et second anneaux (25, 26) en une position plus proche de l'unité de tête de coupe (12).
